# EUROPÄISCHE PATENTSCHRIFT

(11) **EP 0 615 098 B1**
(45) Veröffentlichungstag und Bekanntmachung des Hinweises auf die Patenterteilung: **14.08.1996**
(21) Anmeldenummer: 93103296.5
(22) Anmeldetag: 02.03.1993
(51) Int. Cl.: F24C 15/20, B01D 45/06, E04B 9/02

(54) **Vorrichtung zum Abscheiden von Partikeln, insbesondere Öl- oder Fettpartikeln**
Device for separating particles, in particular oil or fat particles
Dispositif pour séparer des particules, notamment des particules d'huile ou de graisse

(43) Veröffentlichungstag der Anmeldung: 14.09.1994
(73) Patentinhaber: WIMBÖCK BESITZ GmbH, D-83242 Reit im Winkl (DE)
(72) Erfinder: Wimböck, Peter, D-83242 Reit im Winkl (DE)
(74) Vertreter: Kohlmann, Karl Friedrich, Dipl.-Ing.

(56) Entgegenhaltungen:
- DE-A- 2 641 765
- DE-A- 2 718 611
- US-A- 3 813 856

## Beschreibung

Die vorliegende Erfindung betrifft eine Vorrichtung gemäß dem Oberbegriff des Anspruchs 1.

Vorrichtungen dieser Art werden besonders in Großküchen eingesetzt, um die Öl- oder Fettpartikel aus der Abluft abzuscheiden. Sie haben gegenüber herkömmlichen Einrichtungen mit Aluminiumdrahtgewebe-Filterkörpern einen erheblich höheren Abscheidungsgrad und sind problemlos zu reinigen. Zudem ist ein Durchbrennen dieser Vorrichtungen mit der daraus resultierenden Brandgefahr in den Abluftkanälen praktisch nicht mehr möglich.

Aus der DE-OS 27 18 611 ist eine Vorrichtung zum Be- und Entlüften von Räumen mit feuchter und/oder fetter Atmosphäre bekannt.

Bei dieser bekannten Vorrichtung sind kreisbogenförmige Lamellen mit einer in Längsrichtung verlaufenden Öffnung vorgesehen, deren benachbarte Lamellen jeweils abwechselnd mit ihrer Öffnung nach oben und unten angeordnet sind, wobei die Lamellen ineinandergreifen und sich ihre Ränder mit Abstand hintergreifen. Die kreisbogenförmigen Lamellen besitzen einen Innenwinkel mehr als 180°. Dies ergibt im Überlappungsbereich der ineinandergreifenden Lamellen eine entsprechende ovale Kammer mit ausreichender Größe, um beim Durchströmen der Luft diese in unterschiedliche Strömungsgeschwindigkeiten zu versetzen. Die unterschiedlichen Strömungsgeschwindigkeiten werden durch die zweifache Umlenkung um 180° und durch die beim Ein und Ausströmen in bzw. aus der ovalen Kammer entstehende Verdichtung bzw. Entspannung des Luftstromes hervorgerufen. Dadurch wird erreicht, daß die im Luftstrom enthaltenen Partikel, insbesondere Öl- bzw. Fettpartikel, aufgrund ihrer größeren Masse an die Lamelleninnenflächen geschleudert werden, sich dort ablagern und von dort abwärts in eine Sammelrinne ablaufen können.

Eine ovale Kammer, die eine sich erweiternde und wieder verengende Turbulenzstrecke bildet, ist schon in der DE-AS 1 122 498 beschrieben. In der Auslegeschrift wird eine Vorrichtung beschrieben, bei der die Lamellen bzw. Leitbleche zwischen den zwei Umlenkzonen konkav zueinander gekrümmt sind. Eine solche Ausbildung einer Kammer hat den Vorteil, daß dort die Strömung sich nach der Umlenkung verzögert und durch Verwirbelung neu ordnet. Der Abscheidegrad von Partikeln aus einem Luftstrom kann durch eine solche Ausbildung einer Kammer gegenüber herkömmlichen Abscheidevorrichtungen, wie z.B. Aluminiumdrahtgewebe-Filterkörpern, stark erhöht werden.

Die genannten Vorrichtungen zur Abscheidung von fein verteilten Flüssigkeitspartikeln aus einem durch diese hindurchtretenden Luftstrom bestehen aus einer Vielzahl von Lamellen, die in extra zu fertigende Rahmen eingesetzt und positioniert werden müssen, um ihre definierte Lage zueinander zu erhalten. Eine solche Bauweise erfordert eine komplizierte und aufwendige Herstellung und verteuert das Produkt. Außerdem ist die für einen vorbestimmten Luftstrom erforderliche Bauhöhe relativ hoch, um die beschriebene Turbolenzstrecke zu erhalten.

Es ist auch bereits eine Vorrichtung zum Abscheiden von Fett aus einem Luftstrom bekannt, deren U-förmige Lamellen im Querschnitt in ihrem Mittelteil aus einem im Querschnitt ebenen Bereich und daran um etwa 45° abgebogenen Lamellenrandstücken bestehen. Die Lamellen sind bei dieser bekannten Vorrichtung zwar gegeneinander versetzt, übergreifen sich jedoch nicht. Jeweils eine Reihe von Lamellen wird bei der bekannten Vorrichtung aus einer Blechplatte durch Tiefziehen geformt. Eine solche Vorrichtung hat den Vorteil, daß eine einfachere und billigere Herstellung möglich ist. Der hohe Abscheidungsgrad der oben genannten Lösungen wird jedoch bei dieser bekannten Konstruktion bei weitem nicht erreicht.

Aufgabe der vorliegenden Erfindung ist es, eine Vorrichtung der eingangs beschriebenen Art derart weiterzubilden, daß bei einem einfachen Aufbau ein hoher Abscheidegrad sichergestellt ist.

Diese Aufgabe wird bei einer gattungsgemäßen Vorrichtung durch die Merkmale des Anspruchs 1 gelöst.

Mit der erfindungsgemäßen speziellen Lamellenform liegt der Abscheidungsgrad von Fett im mit Fettpartikeln beladenen Luftstrom von etwa 0,5 - 1,5 m/s, der insbesondere den Erfordernissen in Großküchen entspricht, bei etwa 98%. Dieser abgeschiedene Anteil von Fett entspricht den mit den bekannten, in der Herstellung aufwendigen Vorrichtungen erreichten Ausscheidungsgraden. Die Lamellen einer Reihe lassen sich jetzt jedoch aus einer Blechplatte durch z.B. Tiefziehen oder auch durch Spritzen von Kunststoff formen.

Ein wesentlicher Vorteil der vorliegenden Erfindung ist es jedoch, daß die Gesamtbauhöhe, die durch die an die äußeren Seiten der unteren und oberen Lamellenreihen angelegten Tangenten bestimmt ist, nicht vergrößert werden muß, um den hohen Abscheidegrad zu erreichen, da die den Abscheidungsgrad stark erhöhende, sich erweiternde und wieder verengende Kammer sich durch die spezielle Lamellenform und durch die versetzte Anordnung der sich sich gegenüberliegenden Lamellen ergibt.

Eine vorteilhafte Ausgestaltung der Erfindung besteht darin, zumindestens eine der einander zugewandten Innenflächen der konkaven Hohlräume der Lamellen mit einer strukturierten Oberfläche auszustatten. Die strukturierte Oberfläche bildet Erhebungen und Vertiefungen, die den mit Partikeln, insbesondere mit Öl- bzw. Fettpartikeln beladenen Luftstrom beim Vorbeiströmen noch stärker verwirbeln und damit eine weitere Erhöhung des Abscheidungsgrades bewirken.

Diese Erhebungen und Vertiefungen können gemäß einer vorteilhaften Weiterbildung jedoch genauso schon beim Formen der Lamellen aus dem Material heraus mitgeformt werden.

Für eine rationelle Fertigung ist es zweckkmäßig, wenn bei der Herstellung der Lamellen gleichzeitig die Ränder der sich gegenüberliegenden Blechplatten jeweils um 90° abgewinkelt werden. Diese abgewinkelten Ränder der sich gegenüberliegenden Blechplatten sind vorteilhafterweise so geformt, daß die Blechplatten ineinanderschachtelbar sind.

Diese Weiterbildung der Erfindung ermöglicht eine einfache Montage der Vorrichtung und vermindert gleichzeitig die Herstellungskosten der Vorrichtung erheblich.

Bei einem sehr hohen Anfall von Partikeln im Luftstrom insbesondere von Öl- oder Fettpartikeln ist eine Ausführungsform gemäß einer Weiterbildung zweckmäßig, bei der die Blechplatten im Bereich ihrer Ränder durch einen die Stirn- und Längsseiten der Blechplatten aufnehmenden Rahmen zusammengefaßt werden. Es besteht dann die Möglichkeit, die Blechplatten wieder lösbar miteinander durch den Rahmen zu verbinden, um die einzelnen Teile, d.h. den Rahmen, die obere und die untere Blechplatte einzeln und damit einfacher und besser reinigen zu können.

Um den einwandfreien Abfluß der anfallenden Partikel, insbesondere Öl- bzw. Fettpartikel, zu gewährleisten, sind in Einbaulage jeweils an der unteren Blechplatte zumindest an deren unteren Rand, vorzugsweise auch an deren oberen Rand, quer zu den Lamellen in Abständen Öffnungen angebracht, durch die die Partikel auf eine Sammelrinne oder ähnliches hindurchtreten können.

Damit die Öffnungen zur Sammelrinne hin einen Spalt aufweisen, um einen einwandfreien Abfluß der Partikel zur Sammelrinne hin zu gewährleisten, sind in Einbaulage jeweils an der unteren Blechplatte an einem Rand quer zu den Lamellen in Abständen Erhebungen vorgesehen.

Im folgenden ist zur weiteren Erläuterung und zum besseren Verständnis ein Ausführungsbeispiel der Erfindung unter Bezugnahme auf die Zeichnung näher beschrieben.

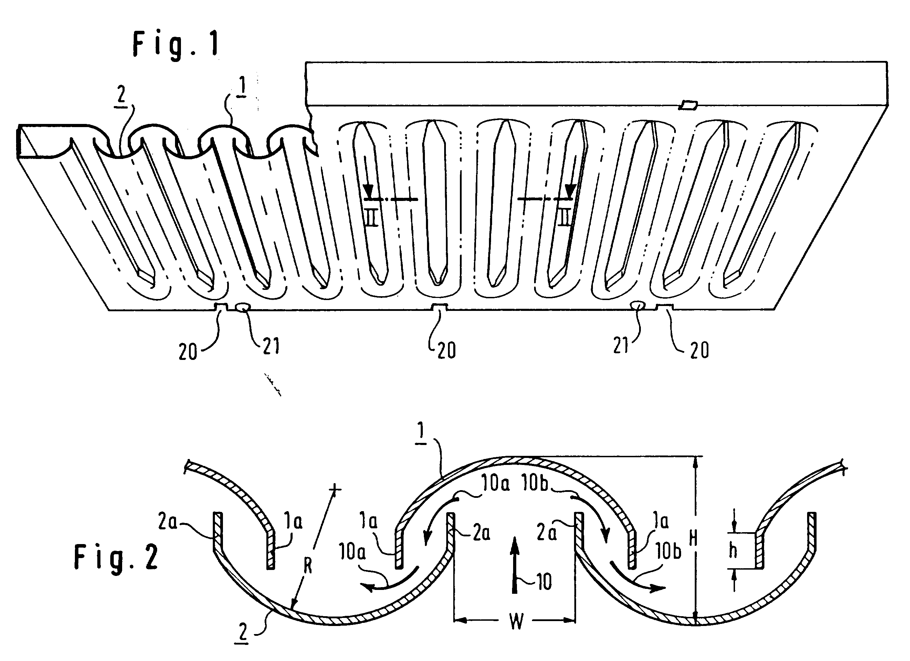

- Fig. 1: zeigt in einer perspektivischen Gesamtansicht, teilweise aufgebrochen eine Vorrichtung der erfindungsgemäßen Art.
- Fig. 2: zeigt in vergrößertem Maßstab den Querschnitt einer Anzahl von Lamellen in einem Schnitt in der Ebene der Fig. 1.

Im vorliegenden Ausführungsbeispiel besitzen die sich gegenüberliegenden Blechplatten, aus denen die Lamellen herausgeformt sind, an ihren Stirn- und Längsrändern Abwinkelungen um 90°. Hierdurch sind die zwei Blechplatten ineinanderschachtelbar und bilden eine direkt zum Einsetzen in eine Abluftanlage vorgesehene Vorrichtung zum Abscheiden von Partikeln.

Eine Lamelle 1, 2 besteht im Querschnitt aus einem Kreisbogenstück über 120° bis 130°, dessen Radius etwa 3/4 der gewünschten Gesamtbauhöhe H beträgt. Durch Abkanten oder Abbiegen sind zwei parallel zur Symmetrieachse des Kreisbogenstücks geradlinige Lamellenränder 1a, 2a angeformt. Die Höhe h der angeformten geradlinigen Lamellenränder 1a, 2a beträgt 3/20 bis 6/20 der Gesamthöhe H der gattungsgemäßen Vorrichtung. Jeweils eine Reihe der sich einander gegenüberliegenden Lamellen 1, 2 wird aus einer Blechplatte durch Tiefziehen geformt. Hierzu wird die Blechplatte mit Bohrungen an den oberen und unteren vorgesehenen Lamellenenden versehen. Die sich gegenüberliegenden Bohrungen werden mit Hilfe eines Werkzeugs durch Einschnitt miteinander verbunden und schließlich die dadurch entstehenden Lamellenränder wie auch der Lamellengrundkörper - das kreisförmige Mittelstück - durch Tiefziehen in die nach Anspruch 1 beanspruchte Form gezogen.

Die Stirn- und Längsränder der Blechplatte werden dabei gleichzeitig um 90° abgekantet und bilden hierdurch einen Rahmen. Der eine Rahmen einer Blechplatte ist derart bemessen, daß er in den anderen Rahmen der anderen Blechplatte hineingesenkt werden kann. Die jeweils aus den Blechplatten herausgeformten und sich gegenüberliegenden Lamellen 1, 2 sind derart versetzt angeordnet, daß die einander gegenüberliegenden Lamellen eine sich verengende und wieder erweiternde und dann wieder verengende Kammer bilden, die den Abscheidegrad von Partikeln aus einem hindurchtretenden Luftstrom 10 erhöht.

Die Lamellenprofilform der erfindungsgemäßen Vorrichtung ermöglicht die Bildung einer derartigen Kammer zwischen zwei sich gegenüberliegenden Lamellen 1, 2 unter Beibehaltung der Gesamtbauhöhe H, was bei dem bekannten Stand der Technik nur durch Lamellenprofile, die sich über mehr als 180° erstrecken, möglich ist. Die erfindungsgemäße Vorrichtung hat den Vorteil, daß ein sehr hoher Abscheidungsgrad feinverteilter Partikel aus einem Luftstrom erreicht wird und die Lamellenprofilform der erfindungsgemäßen Vorrichtung einfach hergestellt werden kann, da Hinterschneidungen zur Bildung einer den Abscheidungsgrad erhöhenden Kammer nicht mehr nötig sind. Mit der Lamellenprofilform der erfindungsgemäßen Vorrichtung wird eine sehr starke Reduzierung der benötigten Einzelteile erreicht.

Die erfindungsgemäße Vorrichtung wird um einen bestimmten Winkel gegenüber der Horizontalen in Lamellenrichtung geneigt, so daß sich die in der Vorrichtung abgeschiedenen Partikel am in Einbaulage unteren Rand sammeln und durch Öffnungen 20 am unteren Rand hindurch auf eine darunterliegende Auffangvorrichtung fließen können.

Tritt ein mit Schmutzpartikeln beladener Luftstrom 10 - gemäß der Figur 2 - in Richtung des Pfeiles 10 mit einer Anströmgeschwindigkeit von 0,2 - 2,0 m/s zwischen zwei Lamellen 2 hindurch, so wird er im Innenraum der gegenüberliegenden Lamelle 1 in zwei Teilströme 10a, 10b unterteilt und gelangt von dort in den Innenraum der Lamellen 1, indem er sich jeweils mit dem benachbarten Teilstrom 10a, 10b wieder vereinigt und zwischen den Lamellen 1 hindurch aus der erfindungsgemäßen Vorrichtung austritt.

Im Verlauf dieses Weges wird der Luftstrom 10 anströmseitig zuerst zwischen Kreisbogenstücken der Lamellen 2 verdichtet. Im Anschluß an eine Entspannungsphase im Innenraum der Lamellen 1 beim Aufteilen in die Teilströme 10a, 10b erfolgt dann beim Vorbeifließen an den Längsrändern 1a, 2a der Lamellen 1, 2 eine erneute Verdichtung. Zwischen den Längsrändern 1a, 2a der Lamellen 1, 2 erfolgt dann eine Entspannung und im Anschluß daran wiederum beim Vorbeiströmen an den Längsrändern 1a, 2a der Lamellen 1 und 2 eine erneute Verdichtung, an die sich eine erneute Entspannung im Innenraum der Lamellen 2 anschließt. Beim Ausströmen aus dem Innenraum der Lamellen 2 zwischen den Längsrändern 1a der Lamellen 1 hindurch erfolgt dann eine erneute Entspannung beim Ausströmen aus der Vorrichtung. Auf diese Weise wird der Luftstrom mehrmals verdichtet und entspannt, wodurch - wie Versuche gezeigt haben - die für den Abscheidungsgrad wesentliche Tropfenbildung angeregt wird.

## Patentansprüche

1. Vorrichtung zum Abscheiden von Partikeln, insbesondere von Öl- oder Fettpartikeln, aus einem durch die Vorrichtung hindurchtretenden Luftstrom, bestehend aus
- einer Anzahl vom im Querschnitt jeweils im wesentlichen U-förmigen Lamellen (1,2), die in zwei einander gegenüberliegenden Reihen jeweils in Abständen parallel nebeneinander angeordnet sind,
- wobei die Lamellen (1,2) der beiden Reihen mit ihren konkaven Hohlräumen einander zugewandt und derart zueinander versetzt angeordnet sind, daß die Ränder zweier benachbarter Lamellen (1,2) der einen Reihe gegenüber dem konkaven Hohlraum einer Lamelle (1,2) der anderen Reihe liegen,
- die Lamellen (1,2) jeweils einer Reihe aus einer Blechplatte herausgeformt sind, und
- daß die Blechplatten der beiden Reihen in einem Abstand voneinander angesetzt sind, der der Gesamtbauhöhe (H) der Vorrichtung entspricht,
dadurch **gekennzeichnet,** daß
- jede Lamelle (1,2) sich im Querschnitt betrachtet, zusammensetzt aus:
in ihrem mittleren Bereich aus einem sich über etwa 120 bis 130° erstreckenden Kreisbogenstück mit einem Radius (R), der in etwa 3/4 der Gesamtbauhöhe (H) beträgt,
in ihren an den mittleren Bereich zu beiden Seiten anschließenden Randbereichen jeweils aus parallel zueinander abgewinkelten Längsrändern (1a,2a), deren Höhe (h) 3/20 bis 6/20 der Gesamtbauhöhe (H) beträgt, und
die lichte Weite eines durch die Längsränder zweier benachbarter Lamellen einer Reihe gebildeten Eintrittskanals (W) etwa 3/4 der Gesamtbauhöhe (H) beträgt.

2. Vorrichtung nach Anspruch 1, dadurch gekennzeichnet, daß mindestens eine der einander zugewandten konkaven Hohlräume der Lamellen (1,2) mit einer strukturierten Oberfläche ausgestattet ist.

3. Vorrichtung nach Anspruch 2, dadurch gekennzeichnet, daß die strukturierte Oberfläche Erhebungen und Vertiefungen bildet.

4. Vorrichtung nach Anspruch 3, dadurch gekennzeichnet, daß die Erhebungen und Vertiefungen aus dem Material der Lamellen (1,2) herausgeformt sind.

5. Vorrichtung nach Anspruch 1, dadurch gekennzeichnet, daß die Ränder einer Blechplatte jeweils um 90° abgewinkelt sind.

6. Vorrichtung nach Anspruch 5, dadurch gekennzeichnet, daß die um 90° abgewinkelten Stirn- und Längsränder derart geformt sind, daß die Blechplatten ineinander verschachtelbar sind.

7. Vorrichtung nach Anspruch 1, dadurch gekennzeichnet, daß die Blechplatten im Bereich ihrer Ränder durch einen die Stirn- und Längsränder der Blechplatten aufnehmenden Rahmen zusammengefaßt werden.

8. Vorrichtung nach Anspruch 1, dadurch gekennzeichnet, daß die in Einbaulage jeweils untere Blechplatte an einem Rand quer zu den Lamellen (1,2) mit in Abständen angebrachten, sich auf die äußere Seite der Vorrichtung erhebenden, zur Auflage auf einen Träger dienenden, Erhebungen (21) ausgestattet ist.

9. Vorrichtung nach Anspruch 8, dadurch gekennzeichnet, daß die an der unteren Blechplatte in Abständen angebrachten Erhebungen (21) aus der Blechplatte herausgeformt sind.

10. Vorrichtung nach Anspruch 1, dadurch gekennzeichnet, daß an der unteren Blechplatte zumindest an deren in Einbaulage unteren Rand quer zu den Lamellen in Abständen Öffnungen (20) angebracht sind.

11. Vorrichtung nach Anspruch 5 und 10, dadurch gekennzeichnet, daß die an der unteren Blechplatte in Abständen angebrachten Öffnungen (20) sich nach der Abwinkelung um 90° genau auf der dadurch gebildeten Kante befinden.

12. Vorrichtung nach Anspruch 1, dadurch gekennzeichnet, daß die an den mittleren Bereich jeder Lamelle (1,2) im Querschnitt zu beiden Seiten anschließenden Längsränder jeweils parallel zur Symmetrieachse des sich über 120° bis 130° erstreckenden Kreisbogenstücks abgewinkelt sind.

## Claims

1. Device for the separation of particles, in particular oil or grease particles, from an air stream passing through the device, consisting of
- a number of lamellae (1, 2) in each case essentially U-shaped in cross-section, which are arranged in two opposed rows in each case at intervals parallel and adjacent to each other,
- wherein the lamellae (1, 2) of the two rows are arranged with their concave cavities facing towards each other and offset from each other in such a way that the edges of two adjacent lamellae (1, 2) of one row are located opposite the concave cavity of a lamella (1, 2) of the other row,
- the lamellae (1, 2) of one row are formed from a metal plate, and
- that the metal plates of the two rows are set at a distance from each other which corresponds to the total height (H) of the device,
characterised in that
- each lamella (1, 2) as seen in cross-section is composed of:
in its central region an arcuate piece extending over 120 to 130 , with a radius (R) which is about 3/4 of the total height (H),
in their edge regions adjoining the central region on both sides, in each case longitudinal edges (1a, 2a) bent parallel to each other, of which the height (h) is 3/20 to 6/20 of the total height (H), and
the inside width of an inlet channel (W) formed by the longitudinal edges of two adjacent lamellae of one row is about 3/4 of the total height (H).

2. Device according to claim 1, characterised in that at least one of the facing concave cavities of the lamellae (1, 2) is provided with a structured surface.

3. Device according to claim 2, characterised in that the structured surface forms projections and depressions.

4. Device according to claim 3, characterised in that the projections and depressions are formed from the material of the lamellae (1, 2).

5. Device according to claim 1, characterised in that the edges of a metal plate are in each case bent at 90 .

6. Device according to claim 5, characterised in that the end and longitudinal edges bent at 90 are shaped in such a way that the metal plates can be nested one inside the other.

7. Device according to claim 1, characterised in that the metal plates in the region of their edges are held together by a frame which receives the end and longitudinal edges of the metal plates.

8. Device according to claim 1, characterised in that the metal plate which is the lower one in the fitted position at one edge transversely to the lamellae (1, 2) is provided with projections (21) arranged at intervals and projecting towards the outer side of the device and serving to rest on a support.

9. Device according to claim 8, characterised in that the projections (21) arranged at intervals on the lower metal plate are formed from the metal plate.

10. Device according to claim 1, characterised in that in the lower metal plate at least at its lower edge in the fitted position transversely to the lamellae at intervals are arranged openings (20).

11. Device according to claims 5 and 10, characterised in that the openings (20) arranged at intervals in the lower metal plate are located after the bend at 90 precisely on the edge formed thereby.

12. Device according to claim 1, characterised in that the longitudinal edges adjoining the central region of each lamella (1, 2) in cross-section on both sides are in each case bent parallel to the axis of symmetry of the arcuate piece extending over 120 to 130.

## Revendications

1. Dispositif destiné à séparer des particules, notamment des particules d'huile ou de graisse, d'un écoulement d'air traversant le dispositif, qui est composé
- d'un certain nombre de lamelles (1, 2) qui présentent chacune une section transversale sensiblement en forme de "U", qui sont disposées dans deux rangées en regard l'une de l'autre, et qui, dans chacune des rangées sont disposées parallèlement côte à côte et à distance les unes des autres,
- les lamelles (1, 2) des deux rangées étant dirigées les unes vers les autres avec leurs cavités concaves, et disposées de manière décalée les unes par rapport aux autres de façon telle, que les bords de deux lamelles (1, 2) voisines, de l'une des rangées, soient situés en regard de la cavité concave d'une lamelle (1, 2) de l'autre rangée,
- les lamelles (1, 2) de chacune des rangées étant réalisées par formage d'une plaque de tôle, et
- les plaques de tôle des deux rangées étant agencées à une distance l'une de l'autre qui correspond à la hauteur d'encombrement totale (H) du dispositif,
caractérisé en ce que
- chaque lamelle (1, 2) se compose, si l'on considère sa section transversale,
dans sa zone centrale, d'une partie en forme d'arc de cercle s'étendant sur environ 120 à 130° et présentant un rayon (R) qui vaut environ 3/4 de la hauteur d'encombrement totale (H),
dans chacune de ses zones de bordure se raccordant des deux côtés à la zone centrale, de bords longitudinaux (1a, 2a) parallèles les uns aux autres et coudés par rapport à la zone centrale, dont la hauteur (h) vaut 3/20 à 6/20 de la hauteur d'encombrement totale (H), et
la largeur de passage libre d'un canal d'entrée (W) formé par les bords longitudinaux de deux lamelles voisines d'une rangée, vaut environ 3/4 de la hauteur d'encombrement totale (H).

2. Dispositif selon la revendication 1, caractérisé en ce que l'une au moins des cavités concaves des lamelles (1, 2), dirigées l'une vers l'autre, est pourvue d'une surface présentant une structure superficielle.

3. Dispositif selon la revendication 2, caractérisé en ce que la surface à structure superficielle forme des protubérances et des creux.

4. Dispositif selon la revendication 3, caractérisé en ce que les protubérances et les creux sont réalisés par formage du matériau des lamelles (1, 2).

5. Dispositif selon la revendication 1, caractérisé en ce que les bords d'une plaque de tôle sont coudés chacun de 90°.

6. Dispositif selon la revendication 5, caractérisé en ce que les bords longitudinaux et frontaux coudés de 90°, sont formés de manière telle, que les plaques de tôle peuvent s'emboîter l'une dans l'autre.

7. Dispositif selon la revendication 1, caractérisé en ce que les plaques de tôle, dans la zone de leurs bords, sont réunis par un cadre recevant les bords frontaux et longitudinaux des plaques de tôle.

8. Dispositif selon la revendication 1, caractérisé en ce que la plaque de tôle inférieure en position montée, est pourvue sur un bord transversal aux lamelles (1, 2), de protubérances (21) agencées à distance les unes des autres, et faisant saillie en direction du côté extérieur du dispositif, et destinées à l'appui sur un support.

9. Dispositif selon la revendication 8, caractérisé en ce que les protubérances (21) prévues sur la plaque de tôle inférieure, sont réalisées par formage de la plaque de tôle.

10. Dispositif selon la revendication 1, caractérisé en ce que sur la plaque de tôle inférieure, au moins sur son bord inférieur en position montée, transversal aux lamelles, sont réalisées des ouvertures (20) espacées les unes des autres.

11. Dispositif selon les revendications 5 et 10, caractérisé en ce que les ouvertures (20) réalisées à distance les unes des autres sur la plaque de tôle inférieure, se trouvent, après le pliage à 90°, précisément sur l'arête ainsi formée.

12. Dispositif selon la revendication 1, caractérisé en ce que les bords longitudinaux se raccordant des deux côtés, en section transversale, à la zone centrale de chaque lamelle (1, 2), sont coudés chacun parallèlement à l'axe de symétrie de la partie en arc de cercle s'étendant sur 120° à 130°.
